# EUROPÄISCHE PATENTSCHRIFT

(11) **EP 4 043 319 B1**
(45) Veröffentlichungstag und Bekanntmachung des Hinweises auf die Patenterteilung: **10.09.2025**
(21) Anmeldenummer: 22154684.9
(22) Anmeldetag: 02.02.2022
(51) Int. Cl.: B62D 5/04, F16H 25/20

(54) **LENKSYSTEM FÜR EIN KRAFTFAHRZEUG UND VERFAHREN ZUM MONTIEREN EINES LENKSYSTEMS FÜR EIN KRAFTFAHRZEUG**
STEERING DEVICE FOR A MOTOR VEHICLE AND METHOD FOR MOUNTING A STEERING DEVICE FOR A MOTOR VEHICLE
SYSTÈME DE DIRECTION POUR UN VÉHICULE AUTOMOBILE ET PROCÉDÉ DE MONTAGE D'UN SYSTÈME DE DIRECTION POUR UN VÉHICULE AUTOMOBILE

(30) Priorität: 10.02.2021 DE 102021201267
(43) Veröffentlichungstag der Anmeldung: 17.08.2022
(73) Patentinhaber: VOLKSWAGEN AG, 38440 Wolfsburg (DE)
(72) Erfinder: Thies, Joachim, 38304 Wolfenbüttel (DE); Schumann, Heiko, 38116 Braunschweig (DE); Kreis, Christopher, 38126 Braunschweig (DE)

(56) Entgegenhaltungen:
- DE-A1- 102019 208 451
- JP-A- 2007 062 412
- JP-A- 2018 111 426
- JP-A- H06 239 247
- US-A1- 2005 061 575

## Beschreibung

Die Erfindung betrifft ein Lenksystem für ein Kraftfahrzeug und ein Verfahren zum Montieren eines Lenksystems eines Kraftfahrzeugs nach den Oberbegriffen der unabhängigen Ansprüche.

Lenksysteme in Kraftfahrzeugen sind oftmals derart gestaltet, dass durch die Betätigung eines Lenkrads durch den Fahrer bzw. - insbesondere im Falle des sogenannten autonomen Fahrens - durch einen entsprechenden Aktor, eine Bewegung einer Schubstange herbeigeführt wird. Diese Schubstange ist typischerweise entlang ihrer Längsrichtung verschiebbar und bewirkt die Lenkbewegungen der Räder. Zu diesem Zweck ist die Schubstange an ihren Enden regelmäßig über Spurstangen mit Achsschenkeln verbunden. Die Schubstange wird hierbei auch als Zwischenstange oder Zahnstange, abhängig von der genauen konstruktiven Ausgestaltung der Lenkung, bezeichnet.

Aus dem Stand der Technik, beispielsweise der DE 10 2017 103 975 A1 oder der DE 203 10 872 U1 sind derartige Lenksysteme mit Schubstangen bekannt. Ein Problem, welches bei den dort gezeigten sowie einer Vielzahl anderer möglicher Realisierungen von Lenksystemen der in Rede stehenden Art besteht, ist, dass bei der Einleitung der zum Bewegen der Schubstange benötigten Kräfte in die Schubstange auch Drehmomente in die Schubstange eingeleitet werden, die ein Verdrehen der Schubstange bewirken würden, wenn diesem Verdrehen nicht durch eine geeignete konstruktive Maßnahme entgegengewirkt wird.

So ist beispielsweise aus der DE 10 2017 103 975 A1 bekannt, dass das Lenksystem eine Führungseinrichtung zur Führung der Schubstange aufweisen kann, wobei die Führungseinrichtung dazu ausgebildet ist, eine Rotation der Schubstange um ihre Längsachse zu verhindern. Die Schubstange weist hierfür eine Abflachung auf. An der Abflachung liegt eine Rolle unter einer Vorspannung an. Die Rolle ist auf einer Rollenachse drehbar gelagert.

In der Praxis besteht bei derartigen Systemen das Problem, eine spielfreie Führung der Schubstange zu gewährleisten, wobei sich die durch die Führungseinrichtung entstehenden Reibungskräfte, gegen die die Schubstange verschoben werden muss, in vertretbaren Grenzen halten. Um dies im Einzelfall zu gewährleisten, ist es wünschenswert, den Widerstand einstellen zu können.

In der DE 10 2017 103 975 A1 ist dies dadurch gelöst, dass die konisch geformten Rollen in Ringen befestigt sind, die die Schubstange umgeben. Durch ein Verdrehen der Ringe können die Rollen quasi in einer Art Torsionsbewegung gegen die Schubstange verspannt werden. Hierfür ist es jedoch notwendig, eine Mehrzahl Inbusschrauben zu betätigen, um die Spannringe zu verspannen. Das Einstellen eines definierten Widerstands gestaltet sich so vergleichsweise aufwändig. Auch ist es nicht möglich, eine Schubstange zu verwenden, die die Abflachung, an der die Rollen anliegen, lediglich über einen von den Enden der Schubstange entfernten Abschnitt der Schubstange aufweist. Derartige Schubstangen besitzen an beiden Enden größere Querschnitte als im Bereich der Abflachung. Es ist nicht möglich oder zumindest äußerst schwierig, derartige Schubstangen durch eine Führungseinrichtung wie die in der DE 10 2017 103 975 A1 gezeigte hindurchzuführen, wenn das Lenksystem montiert wird.

Bei der in der DE 203 10 872 U1 gezeigten Schubstange greift ein federbelastetes Druckstück an einem mit trapezförmigen Abflachungen versehenen Bereich der Spurstange an. Die Montage kann hier bewerkstelligt werden, indem zunächst die Spurstange in die Führungseinrichtung eingeführt wird und dann das Druckstück in diese eingesetzt wird. Der Widerstand, den eine derartige Führungseinrichtung gegen ein Verschieben der Schubstange in der Führungseinrichtung ausübt, gibt die Kraft einer das Druckstück belastenden Feder vor. Eine präzise Einstellung ist daher nicht möglich. Zur Reduzierung der Reibungskräfte sind Wälzkörper zwischen dem Druckstück und der Schubstange vorgesehen. Diese weisen jedoch lediglich kleinflächige Kontakte mit der Schubstange auf, sodass es lokal zu hohen Flächenpressungen kommt. Entsprechend muss das Material der Schubstange gehärtet sein. Die Fertigung einer derartigen Führungseinrichtung ist unter anderem deswegen vergleichsweise teuer.

Die US 2005/0061575 A1 beschreibt ein Lenksystem, bei dem eine Lenkwelle mit einer Schubstange über eine Verzahnung gekoppelt ist. Die Schubstange ist über eine federbelastete Rollenanordnung über V-förmig angeordnete abgeflachte Flächen mit Druckkräften beaufschlagt. Auf diese Weise wird eine Andruckkraft in der Verzahnung zwischen Lenkwelle und Schubstange erzeugt.

Die DE 10 2019 208 451 A1 zeigt ein Lenkgetriebe für ein Kraftfahrzeug, bei dem eine Schubstange mittels einer auf einer Lauffläche der Schubstange abrollenden Walze ein Verdrehen der Schubstange verhindert wird. Schubstange und Walze sind dabei über elastische Kräfte gegeneinander vorgespannt.

Die JP 2018 111 426 A zeigt ein Steer-by-wire-Lenksystem, bei dem Rollen mittels Federkräften beaufschlagt an eine abgeflachte Fläche einer Schubstange angedrückt werden.

Die JP H06 239 247 A zeigt ein Lenksystem, bei dem Rollen an einer abgerundeten Oberfläche der Schubstange des Lenksystems anliegen und die Schubstange gegen die Lenksäule vorspannen.

Die JP 2007 062 412 A zeigt ein Lenksystem, bei dem Rollen an einander gegenüberliegenden abgeflachten Oberflächen der Schubstange des Lenksystems anliegen und die Schubstange gegen einander andrücken.

Der Erfindung liegt die Aufgabe zugrunde, ein Lenksystem für ein Kraftfahrzeug und ein Verfahren zum Montieren eines solchen Lenksystems zur Verfügung zu stellen, welches eine kostengünstige Herstellung, einfache Montage und zuverlässige Einstellung des Widerstands gegen die Bewegung der Schubstange in der Führungseinrichtung ermöglicht.

Die Lösung der Aufgabe erfolgt erfindungsgemäß mit den Merkmalen der unabhängigen Ansprüche. Weitere praktische Ausführungsformen und Vorteile der Erfindung sind in Verbindung mit den abhängigen Ansprüchen beschrieben.

Erfindungsgemäß wird die Aufgabe dadurch gelöst, dass bei dem erfindungsgemäßen Lenksystem zur Einstellung des Widerstands gegen ein Verschieben der Schubstange in der Führungseinrichtung die Rollenachse zur Erzeugung der Vorspannung auf die Schubstange zu bewegbar und in ihrer Position fixierbar ist. Wird die Rollenachse, die bevorzugt rechtwinklig zur Längsrichtung der Schubstange orientiert ist, auf die Schubstange zu bewegt, so erhöht sich die Vorspannung, mit der die Rolle an der Abflachung anliegt. Durch das Erhöhen dieser Vorspannung steigen die Reibkräfte, die bei dem Bewegen der Schubstange entlang ihrer Längsrichtung in der Führungseinrichtung entstehen. Durch die Möglichkeit, die Rollenachse in einer definierten Position zu fixieren, kann so ein definierter Widerstand gegen ein Verschieben der Schubstange in der Führungseinrichtung dauerhaft eingestellt werden. Insbesondere Vorteilhaft ist ein sich zwischen der Rolle und der Abflachung ergebender Linienkontakt. Dieser reduziert durch seine vergleichsweise, z.B. gegenüber Kugellagerungen, große Auflagefläche die Anforderungen an die Härte der Spurstange im Bereich der Abflachung, diese kann insbesondere aus einem ungehärteten Werkstoff sein.

Die Rolle kann dabei insbesondere durch den Außenring eines Wälzlagers gebildet sein. Wälzlager mit Außenringen existieren als standardisierte Bauelemente und können eine kostengünstige und zuverlässige und aufgrund der Rollreibung auch mit einem vergleichsweise niedrigen Reibwiderstand behaftete Möglichkeit darstellen, die auf der Rollenachse gelagerte Rolle zu realisieren. Der Außenring eines derartigen Rollenlagers kann dann direkt auf der Abflachung der Schubstange abrollen. Auf diese Weise lässt sich die Rolle konstruktiv günstig realisieren.

Bei dem Wälzlager kann es sich insbesondere um ein Nadellager handeln. Nadellager weisen den Vorteil auf, dass sie mit einer kleineren Baugröße realisiert werden können als Kugellager.

Die Rollenachse ist um eine zur Rollenachse parallele und exzentrische Drehachse drehbar in der Führungseinrichtung aufgenommen. Hierdurch wird es ermöglicht, dass sich durch ein Drehen der Rollenachse um die Drehachse die Bewegung der Rollenachse auf die Schubstange zu bewirken lässt. Eine derartige Anordnung lässt sich konstruktiv vergleichsweise leicht bewerkstelligen. So müssen an den Enden der Rollenachse lediglich zur Rollenachse exzentrisch angeordnete Elemente vorhanden sein, die in der Führungseinrichtung entsprechend drehbar gelagert sein müssen. Dabei kann eines der Elemente insbesondere ein Gewinde aufweisen. Auf diese Weise lässt sich die Rollenachse in die Führungseinrichtung einschrauben. Die Einschraubbewegung erzeugt hierbei gleichzeitig eine rotierende Bewegung der Rollenachse, bei der diese eine Kreisbahn beschreibt. Auf diese Weise lässt sich zunächst durch ein Einschrauben der Rollenachse in die Führungseinrichtung diese in der Führungseinrichtung montieren, wobei ein letzter Bewegungsabschnitt dieser Bewegung dazu dient, die Rollenachse auf die Schubstange zu zu bewegen, um die Vorspannung, mit der die Rolle an der Schubstange anliegt, zu erzeugen. Sinnvollerweise wird nach dem Einschrauben der Rollenachse mit der darauf aufgenommenen Rolle bis zu einem bestimmten Punkt der Einschraubbewegung zunächst die Schubstange in die Führungseinrichtung eingeführt. Das Fortsetzen des Einschraubvorgangs um bis zu einer halben Umdrehung bewirkt dann die Bewegung der Rolle auf die Schubstange zu und den Aufbau der Vorspannung, ab dem Moment, in der die Rolle mit der Schubstange in Kontakt gelangt.

Die Führungseinrichtung kann ein Gegenlager zur Abstützung der Schubstange auf ihrer von der Rolle abgewandten Seite aufweisen. Ein derartiges Gegenlager hat den Vorteil, dass es auf die Schubstange eine Kraft ausübt, die der von der Rolle auf die Schubstange ausgeübt Kraft entgegengerichtet ist. Das Gegenlager ist daher insbesondere in unmittelbarer Nähe der Rolle in der Führungseinrichtung angeordnet. Auf diese Weise erfolgt die Einleitung der Gegenkraft in räumlicher Nähe zu der Einleitung der Kraft, die aus der Vorspannung, mit der die Rolle an der Schubstange anliegt, resultiert. Eine Anordnung von Rolle und Gegenlager in unmittelbarer räumlicher Nähe führt daher dazu, dass die eingeleiteten Kräfte nicht über weite Strecken in Längsrichtung der Schubstange weitergeleitet werden, woraus Biegemomente in der Schubstange resultieren würden.

Bei dem Gegenlager kann es sich um eine Führungsbuchse handeln. Führungsbuchsen der in Rede stehenden Art sind im wesentlichen kreiszylindrisch geformte Elemente, die insbesondere als Gleitlager für die Schubstange ausgeführt sind. Die Führungsbuchse kann hierbei ein Polyoxymethylen als Werkstoff aufweisen. Polyoxymethylen (kurz POM) kann dabei ein Homopolymer und/oder ein Copolymer sein. Es zeichnet sich durch eine hohe Steifigkeit in Kombination mit niedrigen Reibwerten aus. Es hat sich gezeigt, dass derartige Führungsbuchsen als Gegenlager eine kostengünstige und zuverlässige Lösung darstellen.

Bei dem Lenksystem kann es sich insbesondere um ein Steer-by-Wire-Lenksystem handeln. Steer-by-Wire Lenksysteme sind Lenksysteme, bei denen das Lenkrad mit der Schubstange nicht über eine mechanische Verbindung, wie beispielsweise eine Lenksäule, verbunden ist, die die Bewegung des Lenkrades auf die Schubstange überträgt. Stattdessen ist lediglich ein Aktuator war erforderlich, der die Bewegung der Schubstange entlang ihrer Längsrichtung bewirkt. Das Steer-by-Wire-Lenksystem kann darüber hinaus einen Force Feedback Aktuator aufweisen. Dabei handelt es sich um ein Aktuator, der auf das Lenkrad wirkt und dadurch dem Fahrer des Kraftfahrzeugs den Eindruck auf das Lenkrad wirkender Gegenkräfte, die aus der Lenkung resultieren, zu vermitteln.

Da bei derartigen Steer-by-Wire-Lenksystemen die mechanische Kopplung von Schubstange und Lenksäule wegfällt, besteht auch nicht die Möglichkeit, im Rahmen dieser mechanischen Kopplung ein ungewolltes Verdrehen der Schubstange um ihre Längsachse zu verhindern. Ein erfindungsgemäßes Lenksystem mit einer Führungseinrichtung der beschriebenen Art ist daher insbesondere im Zusammenhang mit einem Steer-by-Wire-Lenksystem besonders vorteilhaft.

Das Lenksystem kann zum Bewirken und/oder Unterstützen der Bewegung der Schubstange einen Elektromotor aufweisen. Der Elektromotor kann mit der Rotationsachse seiner Welle parallel zur Schubachse angeordnet sein. Derartige Anordnungen eines Elektromotors mit der Welle parallel zur Schubstange werden auch als APA-Konzept bezeichnet.

Das von dem Elektromotor erzeugte Drehmoment kann mittels eines Zugmittels auf die Schubstange übertragen werden. Bei dem Zugmittel kann es sich insbesondere um einen Zahnriemen handeln. Insbesondere kann das Drehmoment zunächst auf einen Kugelgewindetrieb übertragen werden, von dem das Drehmoment in eine Kraft zum Bewegen der Schubstange umgewandelt wird. Ein derartiger Kugelgewindetrieb hat den Vorteil, dass er spielfrei und reibungsarm eine Übersetzung zum Übertragen des Drehmoments als Kraft auf die Schubstange erzeugen kann. Die bei der Übertragung des von dem Elektromotor erzeugten Drehmoments auf die Schubstange entstehen typischerweise auch Drehmomente, die in die Schubstange eingeleitet werden. Diesen Drehmomenten kann durch die vorliegende Erfindung entgegengewirkt werden.

Das Verfahren gemäß der vorliegenden Erfindung betrifft das Montieren eines vorstehend beschriebenen Lenksystems. Bei der Montage des Lenksystems wird zunächst die Schubstange in die Führungseinrichtung eingeführt. Die Führungseinrichtung ist hierbei bereits zumindest insoweit vormontiert, dass die Rolle sich bereits in der Führungseinrichtung befindet. Insbesondere kann die Rollenachse bereits in die Führungseinrichtung eingeschraubt sein. Dabei ist die Rollenachse während des Einführens der Schubstange in die Führungseinrichtung in eine Position bewegt, die das Einführen der Schubstange in die Führungseinrichtung ermöglicht. Hierbei handelt es sich insbesondere um eine Position, in der die Rollenachse einen größeren Abstand von der bestimmungsgemäßen Endposition der Schubstange in der Führungseinrichtung aufweist, als es später beim Betrieb des Lenksystems der Fall ist. Insbesondere dann, wenn der Querschnitt der Schubstange an deren beiden Enden größer ist als der Querschnitt der Schubstange im Bereich der Abflachung, kann so ein Ende der Schubstange die Rolle zunächst passieren, da diese zu der Schubstange zunächst vorteilhafterweise noch einen Abstand aufweist, der dies ermöglicht. In einem weiteren Verfahrensschritt wird die Schubstange in der Führungseinrichtung bewegt und der mechanische Widerstand der Führungseinrichtung gegen diese Bewegung gemessen. Dies kann insbesondere in einem hierfür eingerichteten Prüfstand erfolgen. Währenddessen wird die Rollenachse soweit auf die Schubstange zubewegt, bis sie eine Position erreicht, bei deren Erreichen der Widerstand der Führungseinrichtung gegen die Bewegung der Schubstange einen gewünschten Wert erreicht hat. Anschließend wird die Rollenachse in dieser erreichten Position fixiert. Dies kann beispielsweise durch ein Verstemmen, insbesondere eines der exzentrisch zur Rollenachse angeordneten Elemente, erfolgen.

Auf diese Weise lässt sich in einem einfachen und vergleichsweise kostengünstigen Arbeitsgang der Widerstand gegen ein Verschieben der Schubstange in dem Lenksystem präzise und dauerhaft einstellen. Der Vorteil an dieser Vorgehensweise, die insbesondere durch ein erfindungsgemäßes Lenksystem ermöglicht wird, ist es, dass die Einstellung der Kraft, die zum Verschieben der Schubstange in dem Lenksystem benötigt wird, direkt erfolgen kann. Die Einstellung ist daher im Ergebnis zuverlässig und genau, da durch die direkte Messung des Widerstands der Führungseinrichtung gegen die Bewegung der Schubstange, d. h. insbesondere der Messung der zum Bewegen der Schubstange in der Führungseinrichtung benötigten Kraft, Toleranzen der beteiligten Bauelemente ausgeglichen werden können.

In diesem Zusammenhang ist insbesondere eine konstruktive Lösung des Lenksystems von Vorteil, bei der die Rollenachse um eine zur Rollenachse parallele und exzentrische Drehachse drehbar in der Führungseinrichtung aufgenommen ist. Hierbei kann durch eine Drehbewegung von max. 180°, die sich leicht, beispielsweise mit einem einfachen Werkzeug, bewerkstelligen lässt, eine zügige Einstellung durchgeführt werden. Von besonderem Vorteil ist hierbei auch die Bewegungscharakteristik, wenn die Rollenachse durch eine Drehung um die zur Rollenachse exzentrische Drehachse auf die Schubstange zubewegt wird. Bei dieser Bewegung steht der Abstand der Rollenachse von der Schubstange in einem sinusförmigen Zusammenhang mit dem Drehwinkel um die Drehachse. Auf diese Weise ist ein zügiges Verstellen des Abstands der Rolle von der Schubstange möglich, wobei auf dem letzten Abschnitt der Annäherungsbewegung eine präzise Einstellung erfolgen kann, da bei geeigneter Bemessung der Abstände dort nur noch eine minimale Annäherung der Drehachse an die Schubstange aufgrund der Drehbewegung erfolgt.

Weitere praktische Ausführungsformen der Erfindung sind nachfolgend im Zusammenhang mit den Zeichnungen beschrieben. Es zeigen:

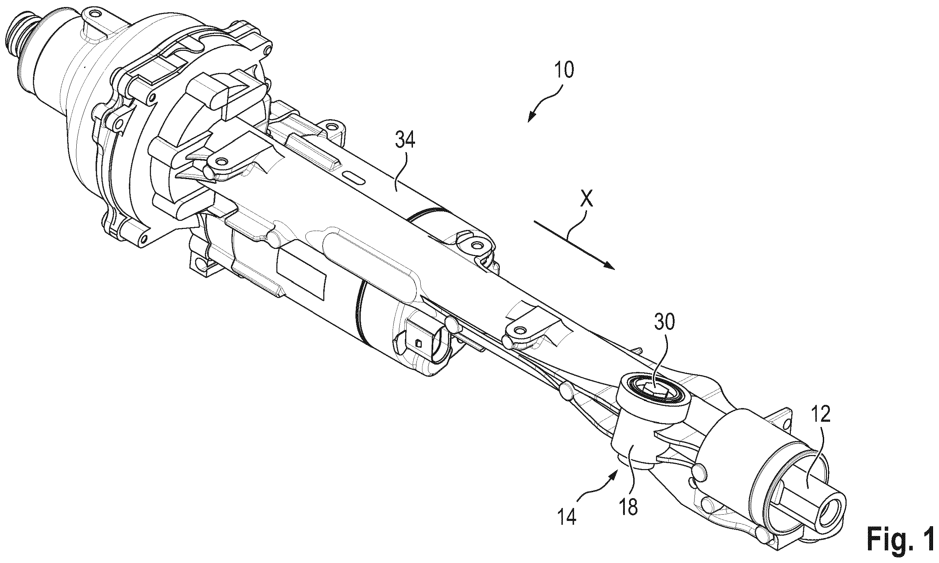

- Fig. 1: ein beispielhaftes Lenksystem,

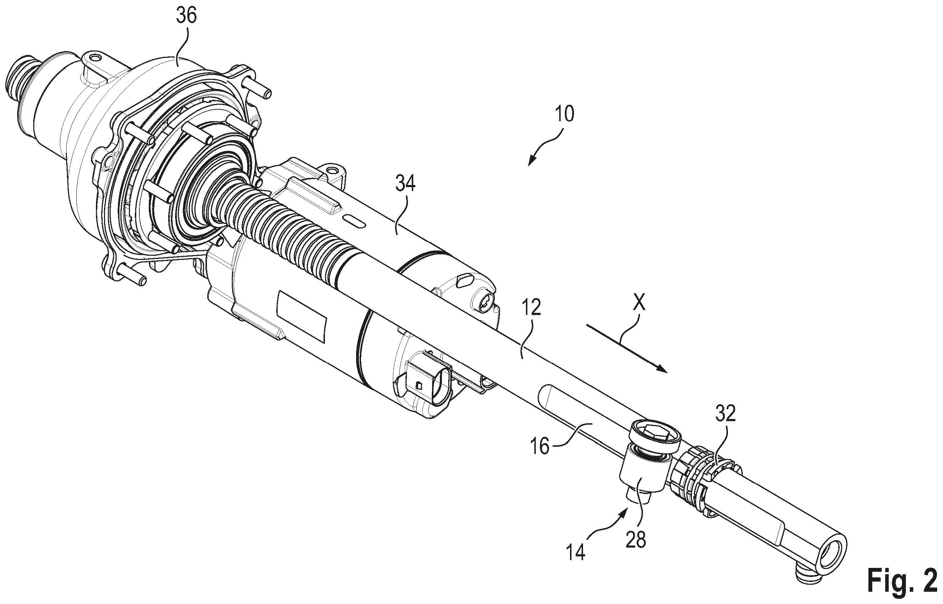

- Fig. 2: das beispielhafte Lenksystem aus Figur 1 unter Weglassung des Gehäuses,

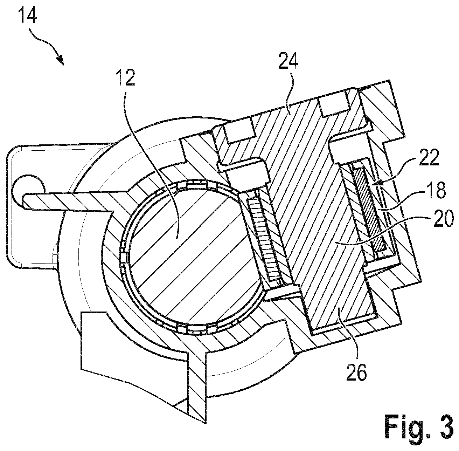

- Fig. 3: eine Schnittdarstellung durch das Lenksystem nach Figur 1 im Bereich der Führungseinrichtung,
- Fig. 4: eine Auswahl beispielhafter Schubstangen.

Das beispielhaft dargestellte Lenksystem 10 weist eine Schubstange 12 auf. Ferner weist das Lenksystem 10 eine Führungseinrichtung 14 zur Führung der Bewegung der Schubstange in ihrer Längsrichtung X auf. Die Führungseinrichtung 14 ist dazu ausgebildet, eine Rotation der Schubstange 12 um Ihre Längsachse zu verhindern. Dabei weist die Schubstange 12 eine Abflachung 16 auf. Eine Rolle 18 liegt unter einer Vorspannung an der Abflachung 16 an. Die Rolle 18 ist hierbei auf einer Rollenachse 20 drehbar gelagert.

Zur Einstellung des Widerstands gegen ein Verschieben der Schubstange 12 in der Führungseinrichtung 14 kann die Rollenachse 20 zur Erzeugung der Vorspannung auf die Schubstange 12 zu bewegt und in ihrer Position fixiert werden.

Wie im gezeigten Beispiel kann die Rolle 18 durch den Außenring eines Wälzlagers 22 gebildet sein. Bei dem Wälzlager 22 kann es sich wie dargestellt um ein Nadellager handeln.

Wie in den Figuren beispielhaft dargestellt ist die Rollenachse 20 um eine zur Rollenachse 20 parallele und exzentrische Drehachse drehbar in der Führungseinrichtung 14 aufgenommen. Im gezeigten Beispiel wird dies dadurch ermöglicht, dass an den Enden der Rollenachse 20 zur Rolle 18 und/oder zur Rollenachse 20 exzentrische Elemente 24 und 26 vorgesehen sind. So kann eines der exzentrischen Elemente 24, 26, beispielsweise das exzentrische Element 24, ein Gewinde aufweisen. Mit diesem ist die Einheit aus Rolle 18 und Rollenachse 20 in das Gehäuse 28 der Führungseinrichtung 14 einschraubbar. Hierfür kann das exzentrische Element 24 wie dargestellt eine geeignete Werkzeugschnittstelle 30, beispielsweise einen Mehrkant, aufweisen. Insbesondere durch eine derartige Werkzeugschnittstelle 30 kann sich ein Drehen der Rollenachse 20 um die Drehachse und damit die Bewegung der Rollenachse 20 auf die Schubstange 12 zu bewirken lassen.

Die Führungseinrichtung 14 kann weiterhin ein Gegenlager 32 zur Abstützung der Schubstange 12 auf ihrer von der Rolle 18 abgewandten Seite aufweisen. Bei dem Gegenlager 32 kann es sich wie dargestellt um eine Führungsbuchse handeln. Das Gegenlager 32 kann insbesondere wie dargestellt in unmittelbarer Nähe der Rolle 18 angeordnet sein.

Wie in den Figuren beispielhaft dargestellt, kann es sich bei dem Lenksystem 10 um ein Steer-by-Wire-Lenksystem handeln. Das Lenksystem 10 kann wie dargestellt einen Elektromotor 34 aufweisen. Wie beispielhaft dargestellt kann der Elektromotor 34 mit seiner Rotationsachse bzw. mit der Rotationsachse seiner Welle parallel zu Schubstange 12 angeordnet sein.

Der Elektromotor 34 kann das erzeugte Drehmoment wie beispielhaft gezeigt insbesondere über einen Kugelgewindetrieb in eine Kraft zum Bewegen der Schubstange 12 umwandeln.

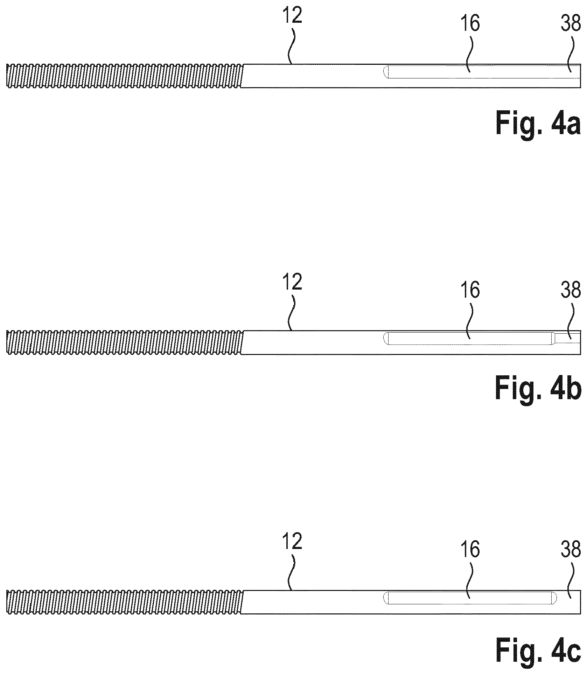

Der Endbereich 38 der Schubstange 12 kann unterschiedlich gestaltet sein. In der Figur 4 sind beispielhaft unterschiedliche Schubstangen 12 mit Abflachungen 16 dargestellt. Diese weisen jeweils unterschiedliche Endbereiche 38 auf. Im Falle der Schubstange 12 in Figur 4a) entspricht der Querschnitt des Endpreis 38 dem Querschnitt im Bereich der Abflachung 16. Eine derartige Schubstange lässt sich bei der Montage des Lenksystems 10 besonders leicht an der Rolle 18 vorbei in eine bereits vormontierte Führungseinrichtung 14 einführen.

Im Fall der in Fig. 4b) dargestellten Schubstange 12 weist der Endbereich 38 einen größeren Querschnitt auf, als diesem Bereich der Abflachung 16 der Fall ist. Im Bereich des Endbereichs 38 ist jedoch ebenfalls eine Reduzierung des dortigen Querschnitts in Gestalt einer Abflachung 16 vorhanden. Diese vereinfacht das Passieren der Rolle 18 bei der Montage der Schubstange.

Im Fall der in Figur 4c) dargestellten Schubstange 12 weist der Endbereich 38 der Schubstange 12 einen kreisrunden Querschnitt auf. Der Querschnitt ist hier im Vergleich mit den in Figur 4a) und 4b) dargestellten Schubstangen 12 der größte, was sich vorteilhaft auf die Krafteinleitung, beispielsweise in eine mit der Schubstange 12 verbundene, nicht dargestellte Spurstange auswirkt. Die Montage gestaltet sich bei einer derartig gestalteten Schubstange 12 im Vergleich am schwierigsten, doch hat sich gezeigt, dass sich das vorliegend beschriebene Lenksystem und insbesondere auch die Montage des Lenksystems, bei dem die Rolle 18 bereits in der Führungseinrichtung 14 montiert ist, wenn die Schubstange 12 in dieser eingeführt wird, auch mit derartig gestalteten Schubstangen 12 realisieren lässt.

### Bezugszeichenliste

- 10: Lenksystem
- 12: Schubstange
- 14: Führungseinrichtung
- 16: Abflachung
- 18: Rolle
- 20: Rollenachse
- 22: Wälzlager
- 24: exzentrisches Element
- 26: exzentrisches Element
- 28: Gehäuse
- 30: Werkzeugschnittstelle
- 32: Gegenlager
- 34: Elektromotor
- 36: Kugelgewindetrieb
- 38: Endbereich

- X: Längsrichtung

## Patentansprüche

1. Lenksystem (10) für ein Kraftfahrzeug, mit einer Schubstange (12), wobei das Lenksystem (10) eine Führungseinrichtung (14) zur Führung der Bewegung der Schubstange (12) in ihrer Längsrichtung aufweist, wobei die Führungseinrichtung (14) dazu ausgebildet ist, eine Rotation der Schubstange (12) um ihre Längsachse zu verhindern, wobei die Schubstange (12) eine Abflachung (16) aufweist, wobei eine Rolle (18) unter einer Vorspannung an der Abflachung (16) anliegt, wobei die Rolle (18) auf einer Rollenachse (20) drehbar gelagert ist, wobei zur Einstellung des Widerstands gegen ein Verschieben der Schubstange (12) in der Führungseinrichtung (14) die Rollenachse (20) zur Erzeugung der Vorspannung auf die Schubstange (12) zu bewegbar und in ihrer Position fixierbar ist, **dadurch gekennzeichnet, dass** die Rollenachse (20) um eine zur Rollenachse (20) parallele und exzentrische Drehachse drehbar in der Führungseinrichtung (14) aufgenommen ist, so dass die Bewegung der Rollenachse (20) auf die Schubstange (12) zu durch ein Drehen der Rollenachse (20) um die Drehachse bewirkbar ist.

2. Lenksystem (10) nach Anspruch 1, **dadurch gekennzeichnet, dass** die Rolle durch den Außenring eines Wälzlagers (22) gebildet ist.

3. Lenksystem (10) nach Anspruch 2, **dadurch gekennzeichnet, dass** es sich bei dem Wälzlager (22) um ein Nadellager handelt.

4. Lenksystem (10) nach einem der vorigen Ansprüche, **dadurch gekennzeichnet, dass** die Führungseinrichtung (14) ein Gegenlager (32) zur Abstützung der Schubstange (12) auf ihrer von der Rolle (18) abgewandten Seite aufweist.

5. Lenksystem (10) nach Anspruch 4, **dadurch gekennzeichnet, dass** es sich bei dem Gegenlager (32) um eine Führungsbuchse aus Polyoxymethylen handelt.

6. Lenksystem (10) nach einem der vorigen Ansprüche, **dadurch gekennzeichnet, dass** es sich bei dem Lenksystem (10) um ein Steer-By-Wire-Lenksystem handelt.

7. Lenksystem (10) nach einem der vorigen Ansprüche, **dadurch gekennzeichnet, dass** das Lenksystem (10) zum Bewirken und/oder Unterstützen der Bewegung der Schubstange (12) einen Elektromotor (34) aufweist, der mit der Rotationsachse seiner Welle parallel zur Schubstange (12) angeordnet ist.

8. Lenksystem (10) nach Anspruch 7, **dadurch gekennzeichnet, dass** das von dem Elektromotor (34) erzeugte Drehmoment mittels eines Zugmittels auf einen Kugelgewindetrieb übertragen und von diesem in eine Kraft zum Bewegen der Schubstange (12) umgewandelt wird.

9. Verfahren zum Montieren eines Lenksystems (10) nach einem der vorigen Ansprüche,
**dadurch gekennzeichnet,**
**dass** bei der Montage des Lenksystems (10) zunächst die Schubstange (12) in die Führungseinrichtung (14) eingeführt wird, wobei die Rollenachse (20) in eine Position bewegt ist, die das Einführen der Schubstange (12) in die Führungseinrichtung (14) ermöglicht, und dass in einem weiteren Verfahrensschritt die Schubstange (12) in der Führungseinrichtung (14) bewegt und der mechanische Widerstand der Führungseinrichtung (14) gegen diese Bewegung gemessen wird, wobei die Rollenachse (20) soweit auf die Schubstange (12) zu bewegt wird, bis sie eine Position erreicht, bei deren Erreichen der Widerstand der Führungseinrichtung (14) gegen die Bewegung der Schubstange (12) einen gewünschten Wert erreicht hat, und die Rollenachse (20) anschließend in der erreichten Position fixiert wird.

## Claims

1. Steering system (10) for a motor vehicle, having a push rod (12), the steering system (10) comprising a guide device (14) for guiding the movement of the push rod (12) in its longitudinal direction, the guide device (14) being designed to prevent rotation of the push rod (12) about its longitudinal axis, the push rod (12) comprising a flattened portion (16), a roller (18) abutting the flattened portion (16) under pretension, the roller (18) being rotatably mounted on a roller axle (20), the roller axle (20), in order to adjust the resistance to displacement of the push rod (12) in the guide device (14), being movable towards the push rod (12) to generate the pretension and can be fixed in its position, **characterized in that** the roller axle (20) is rotatably received in the guide device (14) about an eccentric axis of rotation parallel to the roller axle (20), so that the movement of the roller axle (20) towards the push rod (12) can be effected by rotating the roller axle (20) about the axis of rotation.

2. Steering system (10) according to claim 1, **characterized in that** the roller is formed by the outer ring of a rolling bearing (22).

3. Steering system (10) according to claim 2, **characterized in that** the rolling bearing (22) is a needle bearing.

4. Steering system (10) according to any of the preceding claims,
**characterized in that** the guide device (14) comprises a counter bearing (32) for supporting the push rod (12) on the side thereof that faces away from the roller (18).

5. Steering system (10) according to claim 4, **characterized in that** the counter bearing (32) is a guide bush made of polyoxymethylene.

6. Steering system (10) according to any of the preceding claims,
**characterized in that** the steering system (10) is a steer-by-wire steering system.

7. Steering system (10) according to any of the preceding claims,
**characterized in that** the steering system (10), for effecting and/or assisting the movement of the push rod (12), comprises an electric motor (34) which is arranged with the rotational axis of its shaft parallel to the push rod (12).

8. Steering system (10) according to claim 7, **characterized in that** the torque generated by the electric motor (34) is transmitted by means of a traction means to a ball screw drive and is converted by the latter into a force for moving the push rod (12).

9. Method for assembling a steering system (10) according to any of the preceding claims, **characterized in that** during assembly of the steering system (10), the push rod (12) is first inserted into the guide device (14), the roller axle (20) being moved into a position which enables the push rod (12) to be inserted into the guide device (14),
and **in that** in a further method step, the push rod (12) is moved in the guide device (14) and the mechanical resistance of the guide device (14) to this movement is measured, the roller axle (20) being moved towards the push rod (12) until it reaches a position in which the resistance of the guide device (14) to the movement of the push rod (12) has reached a desired value, and the roller axle (20) then being fixed in the position reached.

## Revendications

1. Système de direction (10) pour un véhicule automobile, comportant une tige de poussée (12), dans lequel le système de direction (10) présente un dispositif de guidage (14) pour guider le mouvement de la tige de poussée (12) dans sa direction longitudinale, dans lequel le dispositif de guidage (14) est conçu pour empêcher une rotation de la tige de poussée (12) autour de son axe longitudinal, dans lequel la tige de poussée (12) présente un méplat (16), dans lequel un galet (18) repose sous une précontrainte contre le méplat (16), dans lequel le galet (18) est monté à rotation sur un axe de galet (20), dans lequel, pour régler la résistance au déplacement de la tige de poussée (12) dans le dispositif de guidage (14), l'axe de galet (20) peut être entraîné en mouvement vers la tige de poussée (12) pour produire la précontrainte et peut être fixé dans sa position, **caractérisé en ce que** l'axe de galet (20) est logé dans le dispositif de guidage (14) de manière à pouvoir tourner autour d'un axe de rotation parallèle à l'axe de galet (20) et excentré, de sorte que le mouvement de l'axe de galet (20) vers la tige de poussée (12) peut être provoqué par une rotation de l'axe de galet (20) autour de l'axe de rotation.

2. Système de direction (10) selon la revendication 1, **caractérisé en ce que** le galet est formé par la bague extérieure d'un palier à roulement (22).

3. Système de direction (10) selon la revendication 2, **caractérisé en ce que** le palier à roulement (22) est un palier à aiguilles.

4. Système de direction (10) selon l'une des revendications précédentes,
**caractérisé en ce que** le dispositif de guidage (14) présente un contre-palier (32) pour soutenir la tige de poussée (12) sur son côté opposé au galet (18).

5. Système de direction (10) selon la revendication 4, **caractérisé en ce que** le contre-palier (32) est une douille de guidage en polyoxyméthylène.

6. Système de direction (10) selon l'une des revendications précédentes,
**caractérisé en ce que** le système de direction (10) est un système de direction à commande électrique.

7. Système de direction (10) selon l'une des revendications précédentes,
**caractérisé en ce que** le système de direction (10) présente, pour provoquer et/ou assister le mouvement de la tige de poussée (12), un moteur électrique (34) qui est agencé parallèlement à la tige de poussée (12) avec l'axe de rotation de son arbre.

8. Système de direction (10) selon la revendication 7, **caractérisé en ce que** le couple généré par le moteur électrique (34) est transmis à un entraînement par vis à billes par le biais d'un moyen de traction et est converti par celui-ci en une force pour entraîner en mouvement la tige de poussée (12).

9. Procédé de montage d'un système de direction (10) selon l'une des revendications précédentes, **caractérisé en ce**
**que**, lors du montage du système de direction (10), la tige de poussée (12) est d'abord introduite dans le dispositif de guidage (14), dans lequel l'axe de galet (20) est entraîné en mouvement dans une position qui permet l'introduction de la tige de poussée (12) dans le dispositif de guidage (14), et en ce que, dans une autre étape de procédé, la tige de poussée (12) est entraînée en mouvement dans le dispositif de guidage (14) et la résistance mécanique du dispositif de guidage (14) à ce mouvement est mesurée, dans lequel l'axe de galet (20) est entraîné en mouvement vers la tige de poussée (12) jusqu'à ce qu'il atteigne une position dans laquelle la résistance du dispositif de guidage (14) au mouvement de la tige de poussée (12) a atteint une valeur souhaitée, et l'axe de galet (20) est ensuite fixé dans la position atteinte.
